# FASCICULE DE BREVET EUROPEEN

(11) **EP 0 847 164 B1**
(45) Date de publication et mention de la délivrance du brevet: **13.09.2006**
(21) Numéro de dépôt: 97810937.9
(22) Date de dépôt: 02.12.1997
(51) Int. Cl.: H04L 12/28, E06B 9/68

(54) **Système de commande avec consigne diffusée par capteur**
Kontrollsystem mit von einem Sensor verteilten Kontrollbefehle
Control system with sensor-distributed commands

(30) Priorité: 06.12.1996 FR 9615021
(43) Date de publication de la demande: 10.06.1998
(73) Titulaire: Somfy SAS, 74300 Cluses (FR)
(72) Inventeur: Motte, Emeric Henri Joseph, 74700 Sallanches (DE); Cheron, Eric, 74440 Taninges (DE); Pepin, Laurent Georges, 74130 Vougy (DE); Holzmayer, Bernhard Jakob, 72127 Kusterdingen (DE)
(74) Mandataire: Bugnion Genève

(56) Documents cités:
- DE-A- 4 446 920
- GB-A- 1 520 647
- US-A- 4 492 908
- US-A- 5 275 219
- US-A- 5 532 560
- HORST GERLACH: "Gebäudesystemtechnik für den Wohnbau" ETZ ELEKTROTECHNISCHE ZEITSCHRIFT, vol. 116, no. 10, 1995, pages 30-32,34,36, XP000518765 BERLIN, DE
- WOLFRAM FRIEDL: "Installation Bus Revolutionizes Building Services" ENGINEERING & AUTOMATION, vol. 14, no. 5, octobre 1992 (1992-10), pages 27-29, XP000322452 BERLIN, DE

## Description

L'invention concerne la domotique et a pour objet un réseau reliant des boîtiers de commande assurant chacun la commande d'un dispositif en fonction d'une consigne commune et d'une grandeur mesurée par un capteur associé à un boîtier de mesure relié au réseau.

De tels réseaux sont bien connus en domotique, par exemple pour la commande de stores ou de volets roulants d'un immeuble. La valeur mesurée est par exemple l'ensoleillement.

Par exemple, un système qui comprend un réseau domestique est décrit par le document US5532560.

Dans les réseaux actuels, à chaque boîtier de commande est associé un moyen d'introduction de la consigne, généralement constitué d'une interface homme-machine. Chaque boîtier de commande compare sa consigne avec la grandeur envoyée sur le réseau par le boîtier de mesure afin de déclencher ou non une action.

Lorsque tous les boîtiers de commande ont la même consigne, il est possible de renoncer au moyen individuel de saisie de la consigne en faveur d'un boîtier commun de gestion qui élabore la consigne et l'envoie sur le réseau à tous les boîtiers de commande. Les points de commande sont simplifiés, mais au prix d'un boîtier supplémentaire.

L'invention a pour but d'obtenir le même résultat sans boîtier supplémentaire.

A cet effet, dans le réseau selon l'invention, la consigne est élaborée dans le boîtier de mesure et diffusée sur le réseau par ce boîtier de mesure.

Le boîtier de mesure diffuse ainsi sur le réseau la valeur de mesure et la valeur de consigne et chaque boîtier de commande reçoit et mémorise ces deux valeurs, puis les compare afin de déclencher ou non une action.

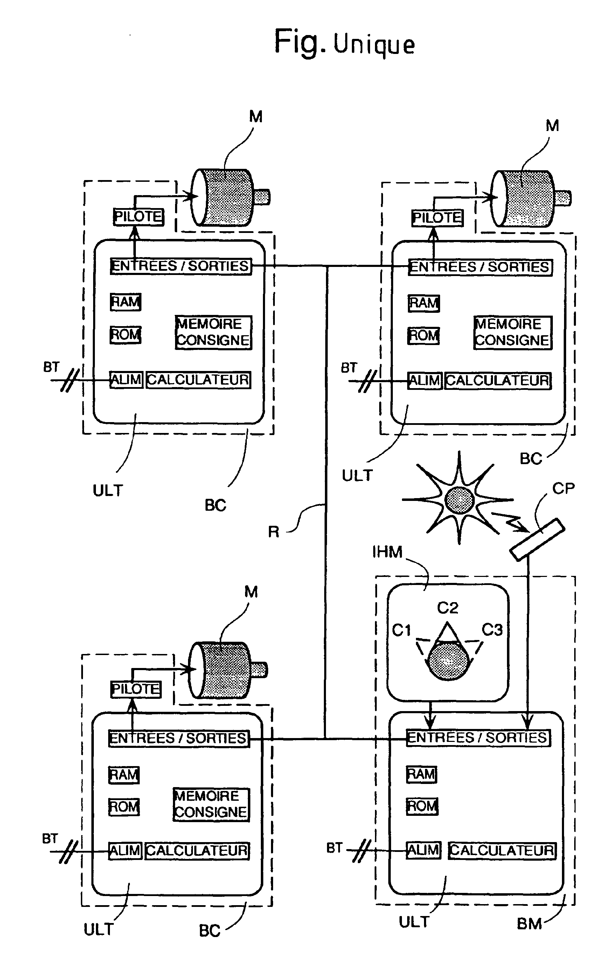

Le dessin représente, à titre d'exemple, un mode d'exécution de l'invention.

L'unique figure du dessin représente schématiquement un réseau très simple constitué seulement de trois boîtiers de commande BC, et d'un boîtier de mesure BM. Chacun de ces boîtiers reçoit de l'énergie électrique du réseau basse tension BT. Les trois boîtiers de commande BC ont une sortie connectée à une charge électrique illustrée par un moteur M. Un réseau R relie tous les boîtiers entre eux.

Chaque boîtier de commande est composé d'une unité logique de traitement ULT et d'un pilote de charge électrique pour l'alimentation du moteur. Chaque ULT est composée d'une mémoire volatile de type RAM pour les calculs, d'une mémoire permanente de type ROM pour contenir le programme de l'application, d'une alimentation ALIM, d'une mémoire permanente, mais réinscriptible de type EEPROM pour enregistrer à volonté la consigne diffusée par le boîtier de mesure, et d'un organe de gestion des entrées et sorties.

Le boîtier de mesure BM est composé d'une unité logique de traitement ULT et d'une interface homme-machine IHM afin de permettre la saisie d'une valeur de consigne, par exemple C2, parmi trois consignes C1, C2 ou C3.

L'ULT du boîtier de mesure est composée d'une mémoire volatile de type RAM pour les calculs, d'une mémoire permanente de type ROM pour contenir le programme de l'application, d'une alimentation ALIM et d'un organe de gestion des entrées et sorties. Le boîtier de mesure BM a une entrée connectée à un capteur CP constitué ici d'une cellule photosensible pour la mesure de l'ensoleillement.

Le boîtier de mesure BM élabore la consigne et diffuse, sur le réseau R, la valeur de consigne et la valeur de mesure calculée à partir de la grandeur fournie par le capteur CP. Chaque boîtier de commande BC reçoit et mémorise ces deux valeurs, puis les compare afin de déclencher ou non une action sur le moteur M.

## Revendications

1. Réseau reliant des boîtiers de commande (BC) assurant chacun la commande d'un dispositif (M) en fonction d'une consigne commune et d'une grandeur mesurée par un capteur (CP) associé à un boîtier de mesure (BM) relié au réseau (R), ledit boîtier de mesure (BM) diffusant sur le réseau une valeur de mesure calculée à partir de la grandeur mesurée, la consigne étant établie dans le boîtier de mesure (BM) et diffusée sur le réseau par ce boîtier de mesure avec la valeur de mesure, **caractérisé en ce que** les deux valeurs sont reçues par les boîtiers de commande (BC) et **en ce que** la comparaison de la consigne avec la valeur de mesure est effectuée dans chacun des boîtiers de commande (BC) afin de déclencher ou non une action.

2. Réseau selon la revendication 1, **caractérisé en ce que** le boîtier de mesure (BM) comprend une interface homme machine (IHM) et **en ce que** la consigne est saisie à partir de l'interface homme machine (IHM).

3. Réseau selon la revendication 1 ou 2, **caractérisé en ce que** l'action concerne une charge électrique.

4. Réseau selon la revendication 3, **caractérisé en ce que** la charge est un moteur (M).

5. Réseau selon l'une des revendications précédentes, **caractérisé en ce que** la valeur de mesure et la consigne sont relatives à l'ensoleillement.

6. Réseau selon l'une des revendications précédentes, **caractérisé en ce que** le capteur comprend une cellule photosensible.

7. Réseau selon l'une des revendications précédentes, **caractérisé en ce que** la valeur de mesure diffusée est calculée à partir de la grandeur fournie par le capteur (CP).

8. Réseau selon l'une des revendications précédentes, **caractérisé en ce que** chaque boîtier de commande comprend une unité logique de traitement et une mémoire pour mémoriser la consigne et la valeur de mesure diffusées sur le réseau.

9. Réseau selon l'une des revendications précédentes, **caractérisé en ce que** le boîtier de mesure possède une unité logique de traitement, une mémoire et un organe de gestion des entrées et sorties.

## Claims

1. A network linking control modules (BC) each providing for the control of a device (M) as a function of a common set point and of a quantity measured by a sensor (CP) associated with a measurement module (BM) linked to the network (R) and said measurement module (BM) broadcasting over the network a measurement value calculated on the basis of the measured quantity, the set point being established in the measurement module (BM) and broadcast over the network by this measurement module with the measurement value, wherein the two values are received by the control modules (BC) and wherein the comparison of the set point with the measurement value is performed in each of the control modules (BC) so as to trigger or not an action.

2. The network as claimed in claim 1, wherein the measurement module (BM) comprises a man machine interface (IHM) and wherein the set point is input using the man machine interface (IHM).

3. The network as claimed in claim 1 or 2, wherein the action relates to an electric load.

4. The network as claimed in claim 3, wherein the load is a motor (M).

5. The network as claimed in one of the preceding claims, wherein the measurement value and the set point relate to sunshine.

6. The network as claimed in one of the preceding claims, wherein the sensor comprises a photosensitive cell.

7. The network as claimed in one of the preceding claims, wherein the measurement value broadcast is calculated on the basis of the quantity provided by the sensor (CP).

8. The network as claimed in one of the preceding claims, wherein each control module comprises a logic processing unit and a memory for storing the set point and the measurement value that are broadcast over the network.

9. The network as claimed in one of the preceding claims, wherein the measurement module comprises a logic processing unit, a memory and a facility for managing the inputs and outputs.

## Patentansprüche

1. Netzwerk, welches Steuerkästen (BC) verbindet, von denen jeder eine Vorrichtung (M) als Funktion eines gemeinsamen Sollwerts und einer von einem Sensor (CP) gemessenen Grösse steuert, wobei der Sensor einem Messkasten (BM) zugeordnet ist, welcher mit dem Netzwerk verbunden ist und in dieses Netzwerk einen aus der gemessenen Grösse berechneten Messwert sendet, und wobei der Sollwert im Messkasten (BM) bestimmt und von diesem Messkasten mit dem Messwert in das Netzwerk gesendet wird, **dadurch gekennzeichnet, dass** die beiden Werte von den Steuerkästen (BC) empfangen werden und dass der Vergleich des Sollwerts mit dem Messwert in jedem der Steuerkästen (BC) erfolgt, damit eine Aktion ausgelöst oder nicht ausgelöst wird.

2. Netzwerk nach Anspruch 1, **dadurch gekennzeichnet, dass** der Messkasten (BM) ein Mensch-Maschine-Interface (IHM) aufweist und daas der Sollwert ausgehend von diesem Interface (IHM) erfasst wird.

3. Netzwerk nach Anspruch 1 oder 2, **dadurch gekennzeichnet, dass** die Aktion eine elektrische Last betrifft.

4. Netzwerk nach Anspruch 3, **dadurch gekennzeichnet, dass** die elektrische Last ein Motor (M) ist.

5. Netzwerk nach einem der vorangehenden Ansprüche, **dadurch gekennzeichnet, dass** der Messwert und der Sollwert die Sonneneinstrahlung betreffen.

6. Netzwerk nach einem der vorangehenden Ansprüche, **dadurch gekennzeichnet, dass** der Sensor eine Photozelle aufweist.

7. Netzwerk nach einem der vorangehenden Ansprüche, **dadurch gekennzeichnet, dass** der ausgesandte Messwert aus der vom Sensor (CP) gelieferten Grösse berechnet wird.

8. Netzwerk nach einem der vorangehenden Ansprüche, **dadurch gekennzeichnet, dass** jeder Steuerkasten eine logische Verarbeitungseinheit und einen Speicher aufweist, in dem der Sollwert und der in das Netzwerk gesandte Messwert gespeichert werden.

9. Netzwerk nach einem der vorangehenden Ansprüche, **dadurch gekennzeichnet, dass** der Messkasten eine logische Verarbeitungseinheit, einen Speicher und ein Organ zur Verwaltung der Eingänge und Ausgänge aufweist.
